# EUROPEAN PATENT SPECIFICATION

(11) **EP 0 633 992 B1**
(45) Date of publication and mention of the grant of the patent: **03.02.1999**
(21) Application number: 92915914.3
(22) Date of filing: 31.03.1992
(51) Int. Cl.: F16L 35/00, F16L 23/024, F16L 37/084

(54) **BEAD CONSTRUCTION FOR FLUID CONDUIT**
BUNDKONSTRUKTION FÜR EINE FLÜSSIGKEITSLEITUNG
STRUCTURE A BOURRELET POUR CONDUIT DE FLUIDE

(43) Date of publication of application: 18.01.1995
(73) Proprietor: PROPRIETARY TECHNOLOGY, INC., Bloomfield Hills, MI 48302-7048 (US)
(72) Inventor: BARTHOLOMEW, Donald Dekle, Mt. Clemens, MI 48045 (US)
(74) Representative: Price, Nigel John King
(86) International application number: US9202511
(87) International publication number: WO9320377

(56) References cited:
- US-A- 1 320 430
- US-A- 1 381 244
- US-A- 1 988 595
- US-A- 2 155 584
- US-A- 2 741 497
- US-A- 2 832 130
- US-A- 2 886 355
- US-A- 3 389 923
- US-A- 3 729 217
- US-A- 4 199 853
- US-A- 4 303 262
- US-A- 4 629 220
- US-A- 4 778 203
- US-A- 4 948 176
- US-A- 5 110 161

## Description

This invention relates to bead assemblies, and more particularly, to bead assemblies which are attachable to tubular conduits and which provide the conduits with blocking walls for abutment by connector assemblies.

In the automotive industry, as well as for many other industries, the need always exist for low cost, reliable and easy to assembly components. This need is especially true with respect to connector assemblies which detachably adjoin fluid conveying conduits, such as fuel or refrigerant lines. Presently, many connector assemblies, and more particularly, many quick connector assemblies are manufactured such that a male conduit is provided with an outwardly projecting bead for abutment by retainer means contained within a female housing. The connection between fluid conveying conduits is generally made by inserting the male conduit into the female housing until the snap connection occurs thereby locking the male conduit within the female housing. Many times, however, tubular conduits already placed in use are not provided with this upwardly projecting bead member. Standard beadless conduits must, therefore, be provided with a bead member before they can be utilized with many connector assemblies. The embodiments of the present invention fulfill this need by providing apparatuses which are attachable to standard tubular conduits thereby converting the standard conduit to a form which can be utilized with connector assemblies and, more particularly, with quick connector assemblies.

Accordingly, it is the primary object of the present invention to provide a standard conduit with an attachable bead member thereby adapting the conduit into one that can be utilized with a connector assembly and, particularly, with a quick connector assembly.

It is another object of the present invention to provide an attachable bead assembly which can be attached to a tubular conduit quickly and easily.

It is yet another object of the present invention to provide attachable bead assemblies which can be used on tubular conduits which are resistant to welding and gluing.

It is also an object of the present invention to provide bead assemblies which are producible at a low cost.

US-A-2 741 497, upon which the preamble of claim 8 is based, discloses a compression locking coupling for engagement with a section of pipe having an external circumferential groove formed therein. The coupling includes a split snap ring which is, in use, snapped into the annular groove to be seated therein. The inside diameter of the snap ring is in contact with the base of the annular groove. The outer peripheral surface of the snap ring is formed with a horizontal portion and an inclined or tapering portion forming an obtuse angle with the horizontal portion.

According to a first aspect of the present invention there is provided an attachable bead assembly for deformable tubular conduits, comprising:
a deformable ring member having a first end and a second end, an inner surface and an outer surface and at least one projecting flange, wherein said at least one flange includes an edge;
whereby said ring member is deformed to attach to a deformable tubular conduit having a desired outer diameter to facilitate connection of the tubular conduit within a connector housing and said ring member after assembly on said tubular conduit returning to its undeformed inner diameter such that said inner diameter is less than said tubular conduit outer diameter such that said ring member deforms said tubular conduit decreasing the tubular conduit diameter at said ring to attach said ring member to said tubular conduit.

According to a second aspect of the present invention there is provided a method of attaching a bead assembly to a tubular conduit, the method comprising the step of:
(a) providing a selectively deformable ring member having a first end and a second end, an inner surface and an outer surface and at least one projecting flange said ring member having a desired inner diameter in an undeformed condition;
characterised in that the method further comprises the steps of:
(b) providing a deformable tubular conduit formed from a plastic;
(c) expanding said ring member such that the ring's inner diameter increases to a size greater than the tubular conduit's outer diameter by inserting a tool between said first and second ends;
(d) positioning said ring member over said tubular conduit; and
(e) removing said tool from between said first and second ends,
whereby removing said tool from between said first and second ends allows said ring member to spring back to its original position and be embedded within the outer diameter of said tubular conduit and said ring member after assembly on said tubular conduit returning to its undeformed inner diameter such that said inner diameter is less than said tubular conduit outer diameter to attach said ring member to said tubular conduit.

Embodiments of apparatus in accordance with the present invention will now be described, by way of example only, with reference to the accompanying drawings.

Fig. 1 is a front view of a first embodiment of the present invention.

Fig. 2 is a cross-sectional end view of the embodiment of Fig. 1.

Fig. 3 is a partial cross-sectional view showing the embodiment of Fig. 1 attached to a conduit.

Fig. 4 is a perspective view of the connection shown in Fig. 3.

Fig. 5 is a partial cross-sectional view showing the embodiment of Fig. 1 in a quick connect relationship.

Fig. 6 is a front view of a second embodiment of the present invention.

Fig. 7 is a cross-sectional end view of the embodiment of Fig. 6.

Fig. 8 is a partially cross-sectional view showing the embodiment of Fig. 6 attached to a conduit.

Fig. 9 is a perspective view of the connection shown in Fig. 8.

Fig. 10 is a partial cross-sectional view showing the embodiment of Fig. 6 in a quick connect relationship.

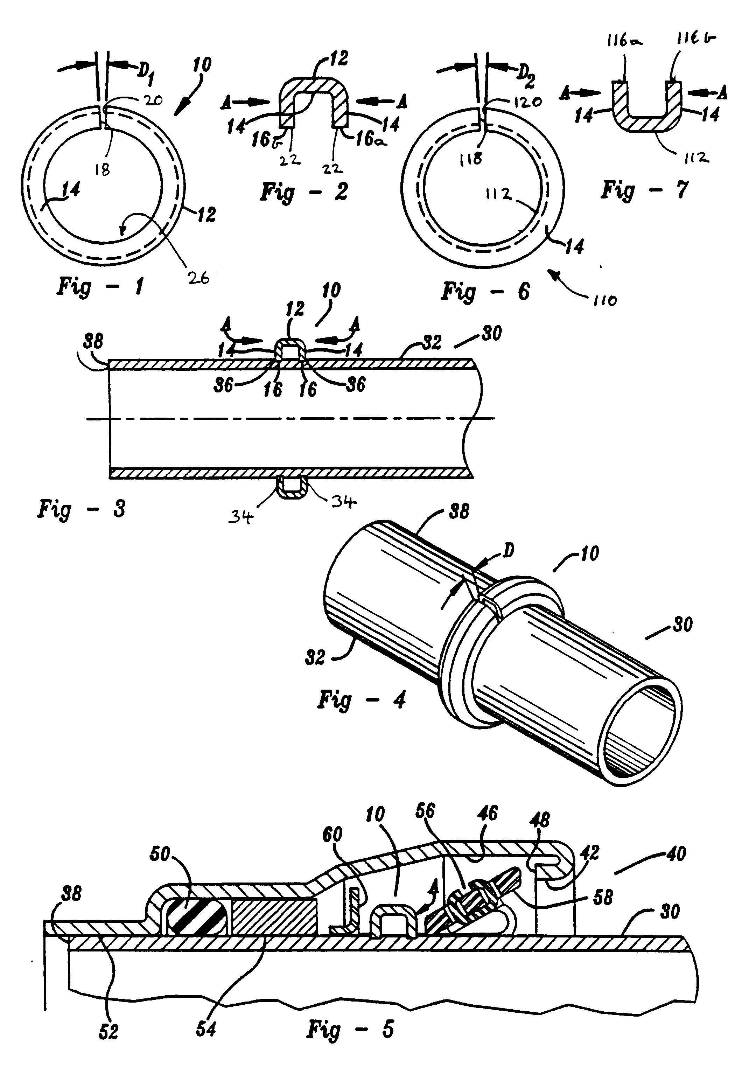

Referring to Figures 1 and 2 a frontal view and a cross-sectional end view of a first embodiment of the present invention are provided. This first embodiment comprises an open ended, substantially rounded ring member 10 which includes an outer surface 12, an inner surface 14, and two flanges 16a and 16b which extend downwardly toward the center 24 of the ring member 10. The ring member 10 is typically manufactured such that the ends 18 and 20, naturally abut. The ring member 10 is formed of a highly resilient material, such as high gauge steel, which imparts springy characteristics and allows the ring member 10 to be selectively deformed. In a preferred embodiment flanges 16a and 16b have rounded edges 22 which limit the force exerted on the conduit 30.

Referring to Figures 3 and 4 a partial cross-sectional view and a perspective view of the first embodiment of the present invention are provided showing the ring member 10 engaging a tubular conduit 30. To position the ring member 10 upon the conduit 30 a prying tool (not shown) is inserted between the ends 18 and 20 and is rotated such that the ends are forced apart. As the ends are separated, the inside diameter 26 of the ring member 10 becomes larger. This prying action is continued until the inside diameter 26 of the ring member 10 becomes greater than the outer diameter 32 of the conduit 30 upon which the ring member 10 is to be mounted. The ring member 10 is then slid over the conduit and positioned for attachment.

The conduit is deformable and may be made of various different materials such as metal or plastic. Metal conduits generally must be formed with a pair of annular grooves 34 prior to attaching the ring member 10. The grooves are typically provided at the time the tubular conduit 30 is manufactured, although it is contemplated that grooves can be formed into the conduit with a device such as a modified pipe cutting tool (not shown) some time after the manufacturing of the conduit and prior to attachment of ring member 10. To attach ring member 10 the edges 22 are aligned directly over the grooves 34 and the prying tool (not shown) is removed. Removal of the prying tool causes the ring member 10 to spring back towards it's original position such that the ends approach each other. Edges 22 fit securely within the grooves 34 to preclude lateral movement of the ring member 10 along the conduit 30.

With tubular conduits formed of plastic many times it is not necessary to supply the conduit with preformed annular grooves 34. The force created by the ring member 10 as it springs back toward the closed position is sufficiently great so as to cause the edges 22 to become embedded within the outer diameter of the tubular conduit. Once the edges 22 have been embedded within the outer diameter 32 of the tubular conduit 30, the tubular conduit can then be utilized with a connector assembly.

Referring to Figure 5 a partial cross-sectional view showing the first embodiment of the present invention as used in a quick-connect relationship is provided. After the ring member 10 has been positioned upon the tubular conduit 30, the tubular conduit is inserted into the female housing 40 to facilitate connection of the two fluid conveying conduits. In the present example, the leading end 38 of the tubular conduit 30 is inserted into the reduced diameter portion 42 of the female housing 40. Sealing ring 50 and bushings 52 and 54 are provided to limit the insertion forces on the connector assembly. A retainer member 56 is disposed within an enlarged diameter portion 46 of the female housing 40 to assist in selectively locking the tubular conduit 30 within the female housing 40. The retainer member 56 is provided with blocking plates 58 which abut the flange 48 of female housing 40 at one end and the first flange 16a of the ring member 10 at the other end. This abutment of the first flange 16a by blocking plates 58 occurs when the flange 16b abuts blocking wall 60.

Referring to Figures 6 and 7 a frontal view and a cross-sectional end view of a second embodiment of the present invention is disclosed as comprising an open ended, substantially rounded ring member 110, an inner surface 112, an outer surface 114, and two flanges 116a and 116b which extend upwardly away from center 124 of ring member 110. Again this ring member 110 is typically manufactured such that the ends 118 and 120, naturally abut. The ring member 110 is formed of a highly resilient material, such as high gauge steel, which imparts springy characteristics and allows the ring member 110 to be selectively deformed.

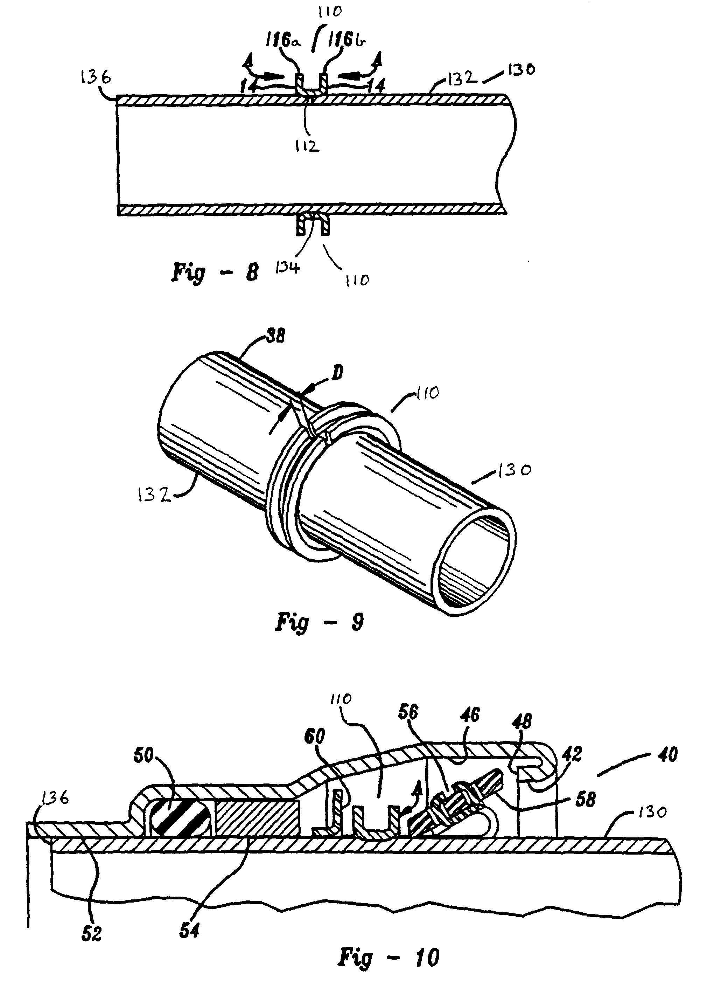

Referring to Figures 8 and 9 a partial cross-sectional view and a perspective view of the second embodiment of the present invention are provided showing the ring member 110 engaging a tubular conduit 130. To position the ring member 110 upon the conduit 30 a prying tool (not shown) is inserted between the ends 118 and 120 and is rotated such that the ends 118 and 120 are forced apart. As the ends are separated the inside diameter 126 of the ring member 110 becomes larger. This prying action is continued until the inside diameter 126 of the ring member 110 becomes greater than the outer diameter 132 of the conduit 130. The ring member 110 is then slid over the conduit 130 and positioned for attachment. Again the tubular conduit 130 is deformable and may be made of various different materials such as metal or plastic. The metal conduits are generally formed with an annular groove 134 substantially equal in width to the width of the ring member 110 to be attached. The groove 134 can be provided at the time the conduit 130 is manufactured or at a later time by using a modified pipe cutting tool (not shown). To attach the ring member 110 the inner surface 112 is aligned directly over the groove 134 and the prying tool (not shown) is removed. Removal of the prying tool causes the ring member 110 to spring back towards its original position such that the inner surface 112 engages the outer diameter of the groove 134. Often with tubular conduits formed of soft plastic it is not necessary to supply the conduit with a preformed annular groove 134. The force created by the ring member 110 as it springs back toward the closed position is sufficiently great to cause the inner surface 112 to become embedded within the outer diameter of the soft plastic tubular conduit.

A partial cross-sectional view showing the second embodiment of the present invention as used in a quick connect relationship is provided in Figure 10. The tubular conduit 130 having ring member 110 attached thereto is inserted into the female housing 40 to facilitate connection of the two fluid conveying conduits as previously described with reference to Figure 5.

It will be understood that the bead assemblies of the present invention may be utilized with a variety of connector and quick connector assemblies.

## Claims

1. An attachable bead assembly for deformable tubular conduits, comprising:
a deformable ring member (10,110) having a first end (18,118) and a second end (20,120), an inner surface (14,112) and an outer surface (12,114) and at least one projecting flange (16a,16b,116a,116b), wherein said at least one flange includes an edge (22);
whereby said ring member (10,110) is deformed to attach to a deformable tubular conduit (30,130) having a desired outer diameter (32,132) to facilitate connection of the tubular conduit within a connector housing (40) and said ring member after assembly on said tubular conduit returning to its undeformed inner diameter (26) such that said inner diameter is less than said tubular conduit outer diameter (32,132) such that said ring member deforms said tubular conduit decreasing the tubular conduit diameter at said ring to attach said ring member to said tubular conduit.

2. The attachable bead assembly of claim 1, wherein said at least one flange (16a,16b) projects downwardly.

3. The attachable bead assembly of claim 2, wherein said edge (22) of said at least one flange (16a,16b) is positioned within an annular groove (34) provided on said tubular conduit (30) thereby precluding lateral movement of said ring member along said tubular conduit.

4. The attachable bead assembly of any one of the preceding claims, wherein said edge (22) of said at least one flange (16a) is rounded.

5. The attachable bead assembly of claim 1, wherein said at least one flange (116a,116b) projects upwardly.

6. The attachable bead assembly of claim 5, wherein said inner surface of said ring member (112) is positioned upon said tubular conduit (130) within an annular groove (134), thereby precluding lateral movement of said ring member along said tubular conduit.

7. The bead assembly of any one of the preceding claims, wherein said ring member (10,110) is made of a resilient metal.

8. A method of attaching a bead assembly to a tubular conduit, the method comprising the step of:
(a) providing a selectively deformable ring member (10,110) having a first end (18,118) and a second end (20,120), an inner surface (14,112) and an outer surface (12,114) and at least one projecting flange (16a,16b,116a,116b) said ring member having a desired inner diameter (26) in an undeformed condition;
characterised in that the method further comprises the steps of:
(b) providing a deformable tubular conduit (30,130) formed from a plastic;
(c) expanding said ring member (10,110) such that the ring's inner diameter (26) increases to a size greater than the tubular conduit's outer diameter (32,132) by inserting a tool between said first and second ends (18,118,20,120);
(d) positioning said ring member (10,110) over said tubular conduit (30,130); and
(e) removing said tool from between said first and second ends,
whereby removing said tool from between said first and second ends allows said ring member to spring back to its original position and be embedded within the outer diameter of said tubular conduit and said ring member after assembly on said tubular conduit returning to its undeformed inner diameter such that said inner diameter is less than said tubular conduit outer diameter to attach said ring member to said tubular conduit.

9. The method of claim 8, wherein said at least one flange (16a,16b) extends downwardly toward said tubular conduit (30).

10. The method of claim 9, wherein said at least one flange (16a,16b) becomes embedded within the outer diameter of said tubular conduit to form an annular groove and thereby preclude lateral movement of said ring member along said conduit.

11. The method of claim 8, wherein said at least one flange (16a,116b) extends upwardly away from said tubular conduit.

12. The method of claim 11, wherein the inner surface of said ring member (110) becomes embedded within the outer diameter of said tubular conduit (130) thereby forming an annular groove and precluding lateral movement of said ring member along said tubular conduit.

## Patentansprüche

1. Ansetzbare Wulstanordnung für verformbare Rohrleitungen, umfassend:
ein verformbares Ringelement (10, 110) mit einem ersten Ende (18, 118) und einem zweiten Ende (20, 120), einer Innenfläche (14, 112) und einer Außenfläche (12, 114) und mindestens einem vorstehenden Flansch (16a, 16b, 116a, 116b), wobei der mindestens eine Flansch eine Kante (22) aufweist;
wobei das Ringelement (10, 110) verformt wird, um an einer verformbaren Rohrleitung (30, 130) gewünschten Außendurchmessers (32, 132) angebracht zu werden, um die Verbindung der Rohrleitung mit einem Verbindergehäuse (40) zu erleichtern, und das Ringelement nach dem Anbringen an der Rohrleitung wieder seinen nicht-verformten Innendurchmesser (26) annimmt, so daß dieser Innendurchmesser kleiner ist als der Rohrleitungs-Außendurchmesser (32, 132), derart, daß das Ringelement die Rohrleitung so verformt, daß der Rohrleitungsdurchmesser an dem Ring abnimmt, um das Ringelement an der Rohrleitung zu befestigen.

2. Ansetzbare Wulstanordnung nach Anspruch 1, bei der zumindest ein Flansch (16a, 16b) nach unten vorsteht.

3. Ansetzbare Wulstanordnung nach Anspruch 2, bei der der Rand (22) des mindestens einen Flansches (16a, 16b) innerhalb einer Ringnut (34) an der Rohrleitung (30) positioniert ist, um dadurch eine seitliche Bewegung des Ringelements entlang der Rohrleitung auszuschließen.

4. Ansetzbare Wulstanordnung nach einem der vorhergehenden Ansprüche, bei der die Kante (22) des mindestens einen Flansches (16a) abgerundet ist.

5. Ansetzbare Wulstanordnung nach Anspruch 1, bei der zumindest ein Flansch (116a, 116b) nach oben vorsteht.

6. Ansetzbare Wulstanordnung nach Anspruch 5, bei der die Innenfläche des Ringelements (112) auf der Rohrleitung (130) in einer Ringnut (134) positioniert ist, um dadurch eine seitliche Bewegung des Ringelements entlang der Rohrleitung auszuschließen.

7. Wulstanordnung nach einem der vorhergehenden Ansprüche, bei der das Ringelement (10, 110) aus federelastischem Metall gefertigt ist.

8. Verfahren zum Anbringen einer Wulstanordnung an einer Rohrleitung, umfassend die Schritte:
(a) Bereitstellen eines selektiv verformbaren Ringelements (10, 110) mit einem ersten Ende (18, 118) und einem zweiten Ende (20, 120), einer Innenfläche (14, 112) und einer Außenfläche (12, 114) und mindestens einem vorstehenden Flansch (16a, 16b, 116a, 116b), wobei das Ringelement in einem nicht-verformten Zustand einen gewünschten Innendurchmesser (26) aufweist;
**dadurch gekennzeichnet,** daß das Verfahren außerdem folgende Schritte beinhaltet:
(b) Bereitstellen einer aus einem Kunststoff gefertigten verformbaren Rohrleitung (30, 130);
(c) Aufweiten des Ringelements (10, 110) derart, daß der Innendurchmesser (26) des Rings bis zu einer Größe zunimmt, die größer ist als der Außendurchmesser (32, 132) der Rohrleitung, indem zwischen das erste und das zweite Ende (18, 118, 20, 120) ein Werkzeug eingeführt wird;
(d) Positionieren des Ringelements (10, 110) über der Rohrleitung (30, 130); und
(e) Entfernen des Werkzeugs von der Stelle zwischen dem ersten und dem zweiten Ende,
wobei durch das Entfernen des Werkzeugs aus der Stelle zwischen dem ersten und dem zweiten Ende das Ringelement in seine ursprüngliche Stellung zurückspringen kann, um in dem Außendurchmesser der Rohrleitung eingebettet zu sein, wobei das Ringelement nach seinem Ansetzen an der Rohrleitung wieder seinen nicht-verformten Innendurchmesser annimmt, demzufolge der Innendurchmesser geringer ist als der Außendurchmesser der Rohrleitung, um das Ringelement an der Rohrleitung anzubringen.

9. Verfahren nach Anspruch 8, bei dem der mindestens eine Flansch (16a, 16b) sich nach unten in Richtung der Rohrleitung (30) erstreckt.

10. Verfahren nach Anspruch 9, bei dem der mindestens eine Flansch (16a, 16b) in dem Außendurchmesser der Rohrleitung eingebettet wird, um eine Ringnut zu bilden und dadurch eine seitliche Bewegung des Ringelements entlang der Leitung auszuschließen.

11. Verfahren nach Anspruch 8, bei dem der mindestens eine Flansch (16a, 116b) sich weg von der Rohrleitung nach oben erstreckt.

12. Verfahren nach Anspruch 11, bei dem die Innenfläche des Ringelements (110) in dem Außendurchmesser der Rohrleitung (130) eingebettet wird, um dadurch eine Ringnut zu bilden und eine seitliche Bewegung des Ringelements entlang der Rohrleitung auszuschließen.

## Revendications

1. Ensemble de bourrelet fixable, destiné à des conduits tubulaires déformables, qui comprend :
- un élément annulaire (10, 110), déformable, présentant une première extrémité (18, 118) et une deuxième extrémité (20, 120), une surface intérieure (14, 112) et une surface extérieure (12, 114) et au moins une collerette en saillie (16a, 16b, 116a, 116b), ladite collerette au nombre d'au moins une présentant un bord (22),
grâce à quoi ledit élément annulaire (10, 110) est déformé pour être fixé à un conduit tubulaire déformable (30, 130) qui a un diamètre extérieur souhaité (32, 132) afin de faciliter le raccordement du conduit tubulaire à l'intérieur d'un boîtier de jonction (40), ledit élément annulaire reprenant, après assemblage sur ledit conduit tubulaire, son diamètre intérieur non déformé (26) de sorte que ledit diamètre intérieur est inférieur audit diamètre extérieur (32, 132) dudit conduit tubulaire, si bien que ledit élément annulaire déforme ledit conduit tubulaire en diminuant le diamètre du conduit tubulaire au niveau de ladite collerette pour fixer ledit élément annulaire audit conduit tubulaire.

2. Ensemble de bourrelet fixable selon la revendication 1, dans lequel ladite collerette (16a, 16b) au nombre d'au moins une fait saillie vers le bas.

3. Ensemble de bourrelet fixable selon la revendication 2, dans lequel ledit bord (22) de ladite collerette (16a, 16b) au nombre d'au moins une est placé à l'intérieur d'une rainure annulaire (34) formée sur ledit conduit tubulaire (30) en empêchant ainsi le déplacement latéral dudit élément annulaire le long dudit conduit tubulaire.

4. Ensemble de bourrelet fixable selon l'une quelconque des précédentes revendications, dans lequel ledit bord (22) de ladite collerette (16a) au nombre d'au moins une est arrondi.

5. Ensemble de bourrelet fixable selon la revendication 1, dans lequel ladite collerette (116a, 116b) au nombre d'au moins une fait saillie vers le haut.

6. Ensemble de bourrelet fixable selon la revendication 5, dans lequel ladite surface intérieure dudit élément annulaire (112) est placée sur ledit conduit tubulaire (130) à l'intérieur d'une rainure annulaire (134), en empêchant ainsi le déplacement latéral dudit élément annulaire le long dudit conduit tubulaire.

7. Ensemble de bourrelet selon l'une quelconque des précédentes revendications, dans lequel ledit élément annulaire (10, 110) est fait d'un métal élastique.

8. Procédé de fixation d'un ensemble de bourrelet sur un conduit tubulaire, le procédé comprenant les étapes consistant à :
a) préparer un élément annulaire (10, 110) sélectivement déformable, présentant une première extrémité (18, 118) et une deuxième extrémité (20, 120), une surface intérieure (14, 112) et une surface extérieure (12, 114) et au moins une collerette en saillie (16a, 16b, 116a, 116b), ledit élément annulaire ayant un diamètre intérieur souhaité (26) quand il n'est pas déformé,
caractérisé en ce que le procédé comprend en outre les étapes consistant à :
b) préparer un conduit tubulaire déformable (30, 130), fait d'une matière plastique,
c) agrandir ledit élément annulaire (10, 110) afin que le diamètre intérieur (26) dudit élément annulaire augmente pour être supérieur au diamètre extérieur (32, 132) du conduit tubulaire, par introduction d'un outil entre lesdites première et deuxième extrémités (18, 118, 20, 120),
d) positionner ledit élément annulaire (10, 110) sur ledit conduit tubulaire (30, 130), et
e) retirer ledit outil d'entre lesdites première et deuxième extrémités,
si bien que le fait de retirer ledit outil d'entre lesdites première et deuxième extrémités permet audit élément annulaire de reprendre sa position d'origine et d'être encastré dans le diamètre extérieur dudit conduit tubulaire, ledit élément annulaire reprenant, après assemblage sur ledit conduit tubulaire, son diamètre intérieur non déformé de sorte que ledit diamètre intérieur est inférieur au diamètre extérieur dudit conduit tubulaire et que ledit élément annulaire est fixé sur ledit conduit tubulaire.

9. Procédé selon la revendication 8, dans lequel ladite collerette (16, 16b) au nombre d'au moins une s'étend vers le bas en direction dudit conduit tubulaire (30).

10. Procédé selon la revendication 9, dans lequel ladite collerette (16, 16b) au nombre d'au moins une s'encastre dans le diamètre extérieur dudit conduit tubulaire pour former une rainure annulaire et empêcher ainsi le déplacement latéral dudit élément annulaire le long dudit conduit.

11. Procédé selon la revendication 8, dans lequel ladite collerette (116a, 116b) au nombre d'au moins une s'étend vers le haut, en s'éloignant dudit conduit tubulaire.

12. Procédé selon la revendication 11, dans lequel la surface intérieure dudit élément annulaire (110) s'encastre dans le diamètre extérieur dudit conduit tubulaire (130) pour former une rainure annulaire et empêcher ainsi le déplacement latéral dudit élément annulaire le long dudit conduit.
